# EUROPÄISCHE PATENTSCHRIFT

(11) **EP 1 421 843 B1**
(45) Veröffentlichungstag und Bekanntmachung des Hinweises auf die Patenterteilung: **23.06.2010**
(21) Anmeldenummer: 03103531.4
(22) Anmeldetag: 24.09.2003
(51) Int. Cl.: A01F 12/40

(54) **Mähdrescher mit Strohhäcksler**
Combine with straw chopper
Moissonneuse-batteuse avec hache-paille

(30) Priorität: 23.10.2002 DE 10249257
(43) Veröffentlichungstag der Anmeldung: 26.05.2004
(73) Patentinhaber: DEERE & COMPANY, Moline, Illinois 61265-8098 (US)
(72) Erfinder: Weichholdt, Dirk, 57200, Sarreguemines (FR); Lauer, Fritz, 66894, Krähenberg (DE)
(74) Vertreter: Holst, Sönke

(56) Entgegenhaltungen:
- EP-A- 1 358 789
- DE-A1- 3 415 708
- US-A- 4 056 107

## Beschreibung

Die Erfindung betrifft einen Mähdrescher gemäß dem Oberbegriff des Anspruchs 1.

Ein Mähdrescher mit einem Strohleitelement ist aus der DE 43 13 841 A bekannt. Die Auswurftrommel dient dazu, die Erntegutreste von einem Axialabscheider wegzufördern und einem Strohhäcksler zuzuführen. Zur Verbesserung der seitlichen Verteilung der Erntegutreste ist zwischen dem Auslass der Auswurftrommel und dem Einlass des Strohhäckslers ein verstellbares Strohleitorgan vorgesehen. Bei den Ausführungsformen dieser Druckschrift, die sich auf einen Mähdrescher mit einem Axialabscheider beziehen, ist kein Langstrohablagebetrieb vorgesehen. Bei einer Ausführungsform mit einem Strohschüttler, bei der keine Auswurftrommel verwendet wird, ist ein an seinem unteren Ende verschwenkbar gelagertes Einzugsblech vorgesehen, das in einer Position das Stroh in den Strohhäcksler und es in seiner anderen Position vor dem Strohhäcksler auf dem Boden abgibt. Aus räumlichen Gründen wäre ein derartiges Einzugsblech an Mähdreschern mit Axialtrennvorrichtungen und ihnen zugeordneten Auswurftrommeln nicht verwendbar.

In der US 4 056 107 A wird ein Mähdrescher eingangs genannter Art beschrieben. Unterhalb des Abgabeendes der Axialtrenneinrichtung ist eine Auswurftrommel angebracht, die das ausgeworfene Stroh im freien Flug nach hinten in die Ausfallhaube des Mähdreschers fördert. Dort befindet sich eine an ihrem oberen Ende um eine horizontal und quer zur Vorwärtsrichtung verlaufende Achse schwenkbar angelenkte Deflektorplatte, die in ihrer nach hinten geschwenkten Position einen Einlass eines Strohhäckslers freigibt und ihn in ihrer nach vorn geschwenkten Position abdeckt. Demnach wird das Stroh in der vorderen Position der Deflektorplatte in einem Langstrohablagemodus auf dem Feld abgelegt und in der rückwärtigen Position der Deflektorplatte gehäckselt und auf dem Feld verteilt.

Die der Erfindung zu Grunde liegende Aufgabe wird darin gesehen, einen Mähdrescher mit einem Axialabscheider und einer Auswurftrommel bereitzustellen, bei dem ein unproblematisches Umschalten zwischen Langstrohablage- und Häckselbetrieb möglich ist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, wenigsten ein Strohleitelement um eine Achse schwenkbar anzubringen, die im Abstand vom Strohleitelement angeordnet ist. Das Strohleitelement kann zwischen der Langstrohablageposition, in der die Erntegutreste in der Regel vor dem Strohhäcksler auf dem Erdboden abgelegt werden, und der Häckselposition verschwenkt werden, in der die Erntegutreste dem Strohhäcksler zugeführt werden. Es bewegt sich auf einer Kreisbahn zwischen der Häcksel- und der Langstrohablageposition. Das Strohleitelement ist um die Achse der Auswurftrommel schwenkbar.

Auf diese Weise erhält man einen kompakten Aufbau der Strohleiteinrichtung. Der Strohhäcksler kann fest am Rahmen des Mähdreschers befestigt werden, da sich ein Bewegen zwischen der Langstrohablage- und der Häckselposition erübrigt.

Das Strohleitelement umschließt die Auswurftrommel vorzugsweise konzentrisch. Ein Vorteil liegt darin, dass dadurch eine Anpassung an den Hüllkreis der Auswurftrommel möglich wird. In der Position, in der das Strohleitelement die Erntegutreste führt, d. h. in Langstrohablageposition und/oder der Häckselposition, ist wegen fehlender scharfer Umlenkungen des Erntegutresteflusses eine reibungsarme Führung der Erntegutreste möglich

In einer bevorzugten Ausführungsform ist das schwenkbare Strohleitelement um eine horizontale, quer zur Fahrtrichtung des Mähdreschers verlaufende Achse schwenkbar. Die Erntegutreste können somit mehr oder weniger weit nach hinten und oben abgelenkt und entweder in den Strohhäcksler oder auf den Erdboden gefördert werden. Wenn der Axialabscheider die Erntegutreste in seitlicher Richtung abgibt, könnte die Schwenkachse des Strohleitelements bzw. der Auswurftrommel sich aber auch in Fahrtrichtung erstrecken.

Das Strohleitelement deckt vorzugsweise in der Langstrohablageposition den Einlass des Strohhäckslers ab und lässt ihn in der Häckselposition frei. Das Stroh wird somit in der Langstrohablageposition daran gehindert, in den Strohhäcksler einzudringen, während es in der Häckselposition ohne Beeinträchtigung in den Strohhäcksler gelangt. Dabei erfolgt der Schwenkvorgang beispielsweise derart, dass das Strohleitelement nach oben und hinten verschwenkt wird, wenn es aus der Langstrohablageposition in die Häckselposition verbracht wird. Es wäre aber auch eine umgekehrte Anordnung denkbar, bei der das Strohleitelement den Erntegutfluss in der Häckselposition nach hinten leitet; dann wird es nach hinten oder nach vorn in die Langstrohablageposition verschwenkt.

Zwischen der Auswurftrommel und dem Strohhäcksler können verstellbare oder feste Leitkufen vorgesehen sein, um den Strohhäcksler möglichst gleichmäßig beschicken zu können. Ähnliche Strohleitbleche können stromab des Strohhäckslers und/oder stromab des in die Langstrohablage verbrachten Strohleitelements angeordnet sein.

In den Zeichnungen ist ein nachfolgend näher beschriebenes Ausführungsbeispiel der Erfindung dargestellt. Es zeigt:
- Fig. 1: einen Mähdrescher in Seitenansicht und schematischer Darstellung mit einem Axialabscheider und einer teilweise von einem Strohleitelement umschlossenen Auswurftrommel, der ein Strohhäcksler folgt, wobei sich das Strohleitelement in der Langstrohablageposition befindet,
- Fig. 2: die Ansicht des Mähdreschers aus Figur 1 mit einem in die Häckselposition verbrachten Strohleitelement,
- Fig. 3: eine perspektivische rückwärtige Ansicht der Auswurftrommel mit in die Langstrohablageposition verbrachtem Strohleitelement,
- Fig. 4: eine perspektivische rückwärtige Ansicht der Auswurftrommel mit in die Häckselposition verbrachtem Strohleitelement,
- Fig. 5: eine perspektivische Ansicht der Auswurftrommel und einer Auswurfhaube von unten, wobei das Strohleitelement aus Gründen der Übersichtlichkeit fortgelassen wurde, und
- Fig. 6: eine Draufsicht auf die Axialabscheider des Mähdreschers und die Auswurfhaube.

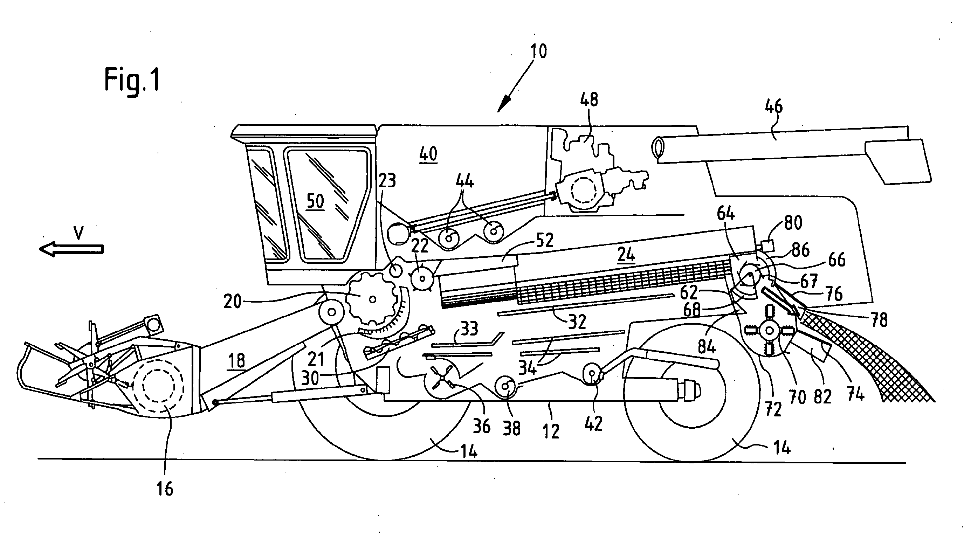

Figur 1 zeigt einen selbstfahrenden Mähdrescher 10 mit einem Tragrahmen 12, der sich über Räder 14 auf dem Boden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen. An den vorderen Endbereich des Mähdreschers 10 ist eine Erntegutbergungsvorrichtung 16 angeschlossen, um Erntegut von dem Feld zu ernten und es nach oben und hinten durch einen Schrägförderer 18 Dresch- und Abscheidemitteln zuzuführen. Die Dresch- und Abscheidemittel umfassen eine quer angeordnete Dreschtrommel 20 und einen dieser zugeordneten Dreschkorb 21, denen das geerntete Gut zuerst zugeführt wird. Es ist aber auch denkbar, die Dreschtrommel 20 wegzulassen und einen Axialabscheider zu verwenden, der einen Dreschabschnitt und einen Trennabschnitt aufweist. Es kann ein einziger Axialabscheider oder zwei (oder mehrere) nebeneinander angeordnete Axialabscheider Verwendung finden. Eine Abstreifrolle 23 und eine Wendetrommel 22 führen gemeinsam mit einem Zufuhrgehäuse das gedroschene Erntegut von der Dreschtrommel 20 und dem Dreschkorb 21 dem Axialabscheider 24 zu. Der Axialabscheider 24 wird an seiner Rückseite durch ein Getriebe 80 angetrieben. Im Folgenden beziehen sich alle Richtungsangaben, wie vorn, hinten, ober- und unterhalb auf die Vorwärtsfahrtrichtung V des Mähdreschers 10.

Getreide und Spreu, die während des Dreschvorgangs abgeschieden werden, fallen auf wenigstens einen Schneckenförderer 30, der beides einem Vorbereitungsboden 33 zuführt. Getreide und Spreu, die hingegen aus dem Axialabscheider 24 austreten, fallen auf einen Schüttelboden 32, der es zur Weitergabe auf den Vorbereitungsboden 33 führt. Der Vorbereitungsboden 33 gibt das Getreide und die Spreu einem Siebkasten 34 weiter, dem ein Gebläse 36 zugeordnet ist, um die Abscheidung der Spreu von dem Getreide zu unterstützen. Gereinigtes Getreide wird mittels einer Körnerschnecke 38 einem nicht gezeigten Elevator zugeführt, der es in einen Korntank 40 befördert. Eine Überkehrschnecke 42 gibt unausgedroschene Ährenteile durch einen weiteren nicht gezeigten Elevator zurück in den Dreschprozess. Die Spreu kann an der Rückseite der Siebeinrichtung durch einen rotierenden Spreuverteiler ausgeworfen werden. Das gereinigte Getreide aus dem Korntank 40 kann durch ein Entladesystem mit Querschnecken 44 und einem Entladeförderer 46 entladen werden.

Die genannten Systeme werden mittels eines Verbrennungsmotors 48 angetrieben, der von einer Bedienungsperson aus einer Fahrerkabine 50 heraus gesteuert wird. Die verschiedenen Vorrichtungen zum Dreschen, Fördern, Reinigen und Abscheiden befinden sich innerhalb des Tragrahmens 12.

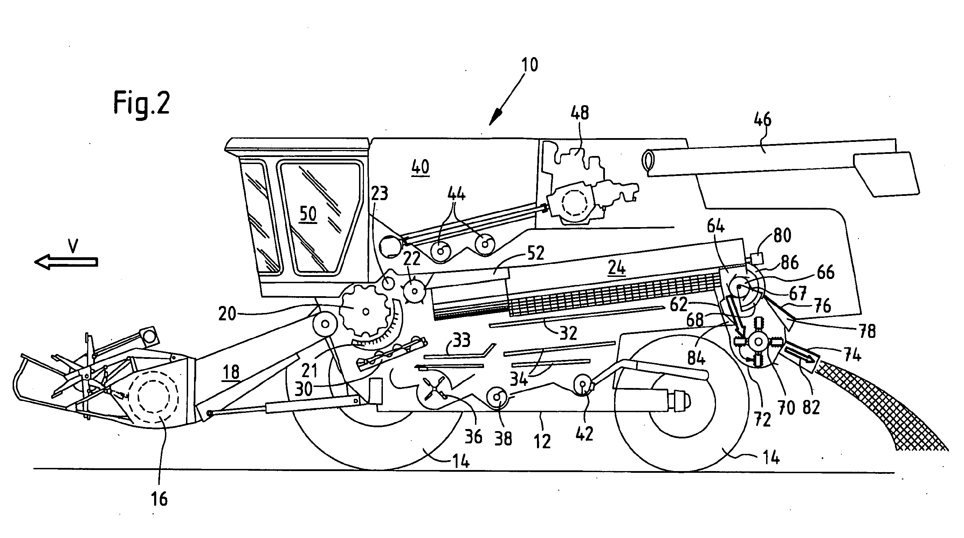

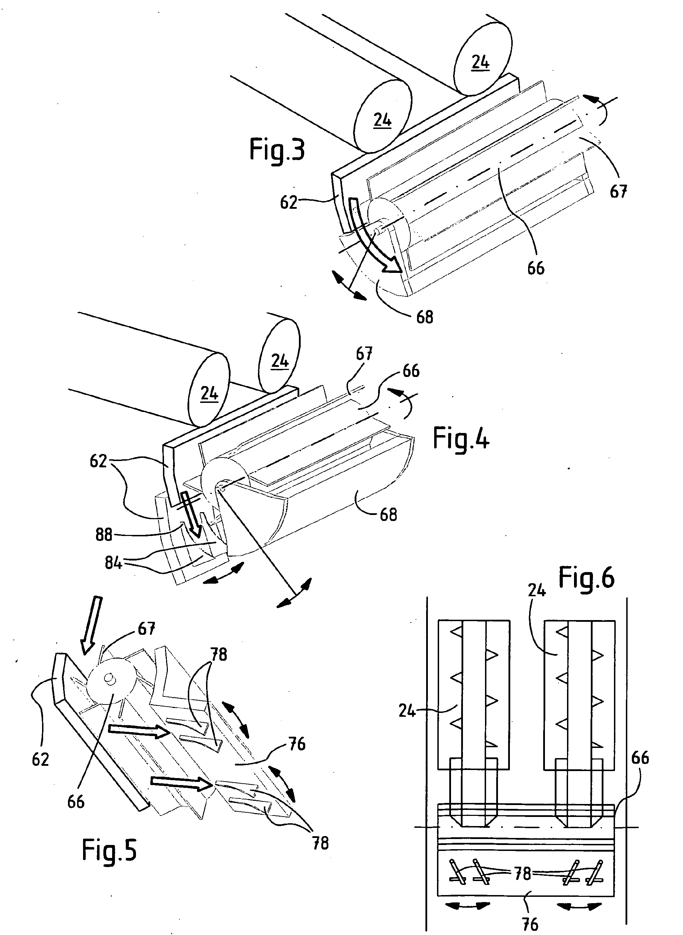

Vom Axialabscheider 24 werden ausgedroschene Erntegutreste (Stroh) durch einen Auslass 64 an der Unterseite des rückwärtigen Endes des nach hinten geschlossenen Axialabscheiders 24 nach unten ausgeworfen. Durch die Wirkung der Fliehkraft und der Schwerkraft fallen die Erntegutreste in einen vertikalen Auswurfschacht, der nach vorn durch eine vordere Wand 62 begrenzt wird. Unterhalb des Auslasses 64 ist eine Auswurftrommel 66 angeordnet, um deren Umfang Mitnehmer 67 verteilt sind. Nach hinten ist die Auswurftrommel 66 von einer rückwärtigen Wand 86 eingeschlossen. Die Auswurftrommel 66 wird um ihre Längsachse, die sich quer zur Fahrtrichtung erstreckt, in Drehung versetzt, in Figur 1 im Gegenuhrzeigersinn. Etwa auf der halben Höhe der vorderen Wand 62 liegt an ihr, etwa unterhalb der Drehachse der Auswurftrommel 66, ein als Ganzes um die Drehachse der Auswurftrommel 66 schwenkbares Strohleitelement 68 an. Das Strohleitelement 68 kann um diese Achse zwischen der in den Figuren 1 und 3 dargestellten Langstrohablageposition und der in den Figuren 2 und 4 dargestellten Häckselposition verschwenkt werden.

Unterhalb und geringfügig hinter der Auswurftrommel 66 ist in einem Gehäuse 72 ein an sich bekannter Strohhäcksler 70 angeordnet, der um eine horizontale, quer zur Fahrtrichtung verlaufende Achse (in den Figuren im Gegenuhrzeigersinn) rotativ antreibbar ist. Er umfasst einen zylindrischen Körper mit pendelnd daran aufgehängten Häckselmessern, die mit im Gehäuse 72 angeordneten stationären Gegenmessern zusammenwirken, um die Erntegutreste zu häckseln und mittels einer mit Strohleitblechen 82 ausgestatteten Strohverteilerhaube 74 etwa über die Schnittbreite des Mähdreschers 10 auf dem Feld zu verteilen. Ein Teil des Gehäuses 72 könnte sich auch oberhalb des Strohhäckslers 70 vom vorderen Ende der Strohverteilerhaube 70 kreisbogenförmig bis etwa zu einem Punkt oberhalb der Drehachse des Strohhäckslers 70 erstrecken.

Das Strohleitelement 68 ist in sich konkav (kreisbogenförmig) gekrümmt und umschließt die Auswurftrommel 66 um einen Winkelbereich von etwa 45° konzentrisch. Es ist an seinen in Querrichtung äußeren Enden schwenkbar am Tragrahmen 12 des Mähdreschers 10 angelenkt, wie in den Figuren 3 und 4 dargestellt. Das Strohleitelement 68 erstreckt sich in den in den Figuren 1 und 3 wiedergegebenen Langstrohablageposition von der vorderen Wand 62 bis etwa über die Drehachse des Strohhäckslers 70. In dieser Position bewirkt das Strohleitelement 68, dass die ausgedroschenen Erntegutreste von der Auswurftrommel 66 unterhalb einer Auswurfhaube 76 schräg nach hinten und unten abgegeben werden. Die Auswurfhaube 76 ist - wie die Strohverteilerhaube 74 - an ihrer Unterseite mit Strohleitblechen 78 versehen, um die Breite des Schwads, in der die Erntegutreste abgelegt werden, zu definieren.

In der Häckselposition ist das Strohleitelement 68 um die Drehachse der Auswurftrommel 66 (bezüglich der Figur 1 im Uhrzeigersinn) nach hinten verschwenkt. Dadurch wird zwischen der vorderen Wand 62 und der vorderen Kante des Strohleitelements 68 eine Öffnung freigegeben, durch die die Erntegutreste in den Strohhäcksler 70 gelangen. Das Strohleitelement 68 verlängert in dieser Position die rückwärtige Wand 86 nach unten und vorn. In ihrem Bereich unterhalb der Linie, an der das Strohleitelement 68 zum Anliegen kommt, wenn es sich in der Langstrohablageposition befindet, ist die vordere Wand 62 ebenfalls mit Leitkufen 84 versehen, um den Strohhäcksler 70 möglichst gleichmäßig beschicken zu können. Im Strohhäcksler 70 werden die Erntegutreste gehäckselt und schräg nach hinten und unten ausgeworfen. Unterhalb der am Auswurf des Strohhäckslers 70 angeordneten Strohverteilerhaube 74 sind Strohleitbleche 82 vorgesehen, um die Richtung vorzugeben, in der die Erntegutreste auf den Boden des Feldes abgegeben werden.

Das Strohleitelement 68 kann durch einen Mechanismus von Hand oder durch geeignete Motore vorzugsweise aus der Fahrerkabine 50 ferngesteuert zwischen der Langstrohablage- und der Häckselposition bewegt werden.

Die Leitkufen 84 am unteren Teil der vorderen Wand 62 sind an ihren vorderen Enden um quer zur Strohflussrichtung verlaufende Achsen 88 schwenkbar an der vorderen Wand 62 befestigt, wie insbesondere anhand der Figur 4 erkennbar ist. Sie können in einer einfachen Ausführungsform manuell verstellt und arretiert werden. In einer anderen Ausführungsform können sie durch einen gemeinsamen Motor oder mehrere, jeweils einzelnen oder mehreren Leitkufen 84 zugeordnete Motore bewegbar sein. Die Motore können durch den Bediener in der Fahrerkabine 50 manuell gesteuert werden. Es kann aber auch ein Sensor (oder mehrere Sensoren) vorgesehen sein, der die Breitenverteilung des Strohs erfasst und den Motor bzw. die Motore steuert, wie in der DE 102 15 026 A beschrieben wird. Die Leitkufen 84 ermöglichen bei Häckselbetrieb, eine über die Breite gleichmäßige Beschickung des Strohhäckslers 70 zu erzeugen. Auch die Strohleitbleche 78 für den Langstrohablagebetrieb und die Strohleitbleche 82 für den Häckselbetrieb können in an sich bekannter Weise an ihren vorderen Enden um die Hochachse schwenkbar angelenkt sein und an ihren hinteren Enden in seitlicher Richtung bewegt werden, um die Schwadbreite bei Langstrohablage bzw. die Breite zu definieren, auf die die gehäckselten Erntegutreste verteilt werden, wie in den Figuren 5 und 6 für die Strohleitbleche 78 angedeutet. Die Verstellung kann manuell oder motorisch, insbesondere mit einer Steuerung durch geeignete Sensoren, die selbsttätig das Erreichen der gewünschten Streubreite sicherstellen, erfolgen.

## Patentansprüche

1. Mähdrescher (10) mit einem Axialabscheider (24) und einer dem Auslass (64) des Axialabscheiders (24) benachbarten, rotativ antreibbaren Auswurftrommel (66), die eingerichtet ist, vom Axialabscheider (24) ausgeworfene Erntegutreste in einen Strohhäcksler (70) zu fördern, wobei zwischen der Auswurftrommel (66) und dem Strohhäcksler (70) ein Strohleitelement (68) angeordnet ist, das um eine von ihm beabstandete Schwenkachse zwischen einer Häckselposition, in der die Pflanzenreste in den Strohhäcksler (74) gelangen, und einer Langstrohablageposition bewegbar ist, in der die Pflanzenreste ungehäckselt auf den Erdboden abgelegt werden, **dadurch gekennzeichnet, dass** das Strohleitelement (68) um die Drehachse der Auswurftrommel (66) schwenkbar ist.

2. Mähdrescher nach Anspruch 1, **dadurch gekennzeichnet, dass** das Strohleitelement (68) einen Teilbereich der Auswurftrommel (66) konzentrisch umschließt.

3. Mähdrescher (10) nach einem der Ansprüche 1 oder 2, **dadurch gekennzeichnet, dass** die Achse, um die das Strohleitelement (68) schwenkbar ist, horizontal und quer zur Fahrtrichtung des Mähdreschers (10) verläuft.

4. Mähdrescher (10) nach einem der Ansprüche 1 bis 3, **dadurch gekennzeichnet, dass** das Strohleitelement (68) in der Langstrohablageposition den Einlass des Strohhäckslers (70) abdeckt und ihn in der Häckselposition freigibt.

5. Mähdrescher (10) nach einem der Ansprüche 1 bis 4, **dadurch gekennzeichnet, dass** das Strohleitelement (68) aus der Häckselposition nach hinten und oben in die Langstrohablageposition verschwenkbar ist.

6. Mähdrescher (10) nach einem der Ansprüche 1 bis 5, **dadurch gekennzeichnet, dass** stromauf des Strohhäckslers (70) verstellbare oder feste Leitkufen (84) angeordnet sind.

7. Mähdrescher (10) nach einem der Ansprüche 1 bis 6, **dadurch gekennzeichnet, dass** stromab der Auswurftrommel (66) eine Auswurfhaube (76) folgt, die mit Strohleitblechen (78) besetzt ist, an denen das Stroh bei in die Langstrohablageposition verbrachtem Strohleitelement (68) entlangläuft.

8. Mähdrescher (10) nach Anspruch 7, **dadurch gekennzeichnet, dass** die Strohleitbleche (78) verstellbar sind.

## Claims

1. Combine (10) having an axial separator (24) and a rotationally drivable discharge drum (66) which is adjacent to the outlet (64) from the axial separator (24) and is set up to convey harvested crop residues discharged from the axial separator into a straw chopper (70), wherein between the discharge drum (66) and the straw chopper (70) there is arranged a straw guide element (68) which can be moved about a pivot axis, which is spaced apart therefrom, between a chopping position, in which the crop residues pass into the straw chopper (74), and a long straw deposition position, in which the plant residues are laid unchopped on the ground, **characterized in that** the straw guide element (68) can be pivoted about the rotational axis of the discharge drum (66).

2. Combine according to Claim 1, **characterized in that** the straw guide element (68) concentrically surrounds a region of the discharge drum (66).

3. Combine (10) according to either of Claims 1 and 2, **characterized in that** the axis about which the straw guide element (68) can be pivoted runs horizontally and transversely to the direction of travel of the combine (10).

4. Combine (10) according to one of Claims 1 to 3, **characterized in that** the straw guide element (68) covers the inlet to the straw chopper (70) in the long straw deposition position and uncovers it in the chopping position.

5. Combine (10) according to one of Claims 1 to 4, **characterized in that** the straw guide element (68) can be pivoted out of the chopping position backwards and upwards into the long straw deposition position.

6. Combine (10) according to one of Claims 1 to 5, **characterized in that** adjustable or fixed guide runners (84) are arranged upstream of the straw chopper (70).

7. Combine (10) according to one of Claims 1 to 6, **characterized in that** downstream of the discharge drum (66) there follows a discharge hood (76) which is fitted with straw guide plates (78) along which the straw runs when the straw guide element (68) has been moved into the long straw deposition position.

8. Combine (10) according to Claim 7, **characterized in that** the straw guide plates (78) are adjustable.

## Revendications

1. Moissonneuse-batteuse (10) comprenant un séparateur axial (24) et un tambour d'éjection (66) pouvant être entraîné en rotation, adjacent à la sortie (64) du séparateur axial (24), qui est prévu pour transporter les résidus de récoltes éjectés par le séparateur axial (24) dans un hache-paille (70), un élément de guidage de la paille (68) étant disposé entre le tambour d'éjection (66) et le hache-paille (70), lequel peut être déplacé autour d'un axe de pivotement espacé de lui entre une position de hachage, dans laquelle les résidus de plantes arrivent dans le hache-paille (70) et une position de dépose de la paille longue, dans laquelle les résidus de plantes sont déposés sur la terre sans avoir été hachés, **caractérisée en ce que** l'élément de guidage de la paille (68) peut pivoter autour de l'axe de rotation du tambour d'éjection (66).

2. Moissonneuse-batteuse selon la revendication 1, **caractérisée en ce que** l'élément de guidage de la paille (68) entoure concentriquement une région partielle du tambour d'éjection (66).

3. Moissonneuse-batteuse (10) selon l'une quelconque des revendications 1 ou 2, **caractérisée en ce que** l'axe autour duquel l'élément de guidage de la paille (68) peut pivoter, s'étend horizontalement et transversalement par rapport à la direction de conduite de la moissonneuse-batteuse (10).

4. Moissonneuse-batteuse (10) selon l'une quelconque des revendications 1 à 3, **caractérisée en ce que** l'élément de guidage de la paille (68) recouvre l'entrée du hache-paille (70) dans la position de dépose de la paille longue et la libère dans la position de hachage.

5. Moissonneuse-batteuse (10) selon l'une quelconque des revendications 1 à 4, **caractérisée en ce que** l'élément de guidage de la paille (68) peut être pivoté de la position de hachage vers l'arrière et vers le haut dans la position de dépose de la paille longue.

6. Moissonneuse-batteuse (10) selon l'une quelconque des revendications 1 à 5, **caractérisée en ce qu'**en amont du hache-paille (70) sont disposés des barres de guidage déplaçables ou fixes (84).

7. Moissonneuse-batteuse (10) selon l'une quelconque des revendications 1 à 6, **caractérisée en ce qu'**en aval du tambour d'éjection (66) suit un capot d'éjection (76), qui est pourvu de tôles de guidage de la paille (78), contre lesquelles la paille peut être déplacée lorsque l'élément de guidage de la paille (68) est amené dans la position de dépose de paille longue.

8. Moissonneuse-batteuse (10) selon la revendication 7, **caractérisée en ce que** les tôles de guidage de la paille (78) sont réglables.
